# EUROPEAN PATENT SPECIFICATION

(11) **EP 1 262 374 B1**
(45) Date of publication and mention of the grant of the patent: **25.08.2004**
(21) Application number: 01202024.4
(22) Date of filing: 29.05.2001
(51) Int. Cl.: B60R 19/18, B60R 19/03

(54) **Crash energy absorbing element**
Element zur Absorption von Aufprallenergie
Elément absorbant l'énergie de choc

(43) Date of publication of application: 04.12.2002
(73) Proprietor: Inalfa Industries B.V., 5800 AM Venray (NL)
(72) Inventor: Janssen, Aloysius Paulus Maria Helena Leonardus, 6129 BA Berg aan de Maas (NL)
(74) Representative: Metman, Karel Johannes

(56) References cited:
- EP-A- 0 604 745
- DE-A- 19 849 358
- DE-A- 19 958 887
- US-A- 5 080 410
- US-A- 5 154 462
- US-A- 5 997 058

## Description

The present invention relates to a crash energy absorbing element for use in a vehicle, having a beam shape and being formed of at least two different beam sections.

One example of such crash energy absorbing elements is a bumper for a passenger car. Conventional bumpers are made of a box beam shaped or an open section of steel which is connected to the body of the car through crash boxes which are adapted to absorb the low speed crash energy. A disadvantage of such crash boxes is that they are well designed to absorb frontal impact crashes, but are prone to buckling or bending during an angled frontal impact crash. Furthermore these separate crash boxes do lead to increased costs.

The features of the preamble of claim 1 are known from DE 198 49 358 A. In this prior art bumper structure, the bumper comprises a central high strength support section and two lower strength absorbing sections on either side of the support section. The ends of the bumper proximate the absorbing sections are adapted to be attached to the vehicle body.

The object of the present invention is to provide an improved crash energy absorbing element.

The crash energy absorbing element according to the invention is characterized by the features of the characterizing portion of claim 1.

In this manner, the crash absorbing part of the element is moved from the rear of the element to the front portion of the element. This leads to a more rigid structure since the rear portion of the bumper remains intact for a longer time thereby maintaining the integrity of the structure. The absorbing and deforming section is now integrated in the element which lowers the production costs.

In an advantageous embodiment of the invention, the support section has integrated attachment members to attach the element to the vehicle. This leads to a lower number of parts and therefore lower production costs.

In case the crash energy absorbing element is constructed as a bumper, it is preferred that the attachment members are adapted to be mounted to the longitudinal members of the body.

In this embodiment, there is a direct rigid fixation of the bumper to the longitudinal members through the rigid support section of the bumper, thereby obviating the need for a separate body cross member. This not only reduces costs and weight, but also results in the possibility of a so-called "walk in front-end" assembly of the engine of the vehicle which is moved into the engine compartment or bay through the open front of the vehicle body. After the engine has been mounted, the front bumper is attached to the body and the engine compartment is closed.

To increase the rigidity of the support section, it may include reinforcement swages, ribs and/or indentations, whereas the absorption behaviour and capacity is improved if the absorbing section includes integrated deformation formations, such as convolutions which initiate a controlled deformation of the absorbing section.

An advantageous manner to form the crash energy absorbing element is hydroforming, and preferably the box beam shaped element is made by hydroforming of a tube that is formed of a blank of at least two different sheet parts welded together which form the support section and the crash absorbing section.

In this production method, complex shapes of the element are possible and many parts can be integrated, which further reduces costs and weight.

The invention will hereafter further explained with reference to the drawings showing exemplary embodiments of the bumper according to the invention.
Fig. 1 is a perspective view of a first embodiment of the crash energy absorbing element according to the invention.
Figs. 2, 3 and 4 are plan, side and rear views, respectively, of the bumper according to fig. 1, on a larger scale.
Figs. 5 and 6 are sectional views along the lines, IV-IV and V-V, respectively in fig. 2.
Fig. 7 is a perspective view, similar to that of fig. 1, showing two further embodiments of the element according to the invention.
Fig. 8 as a cross sectional view of a further embodiment of the element according to the invention.

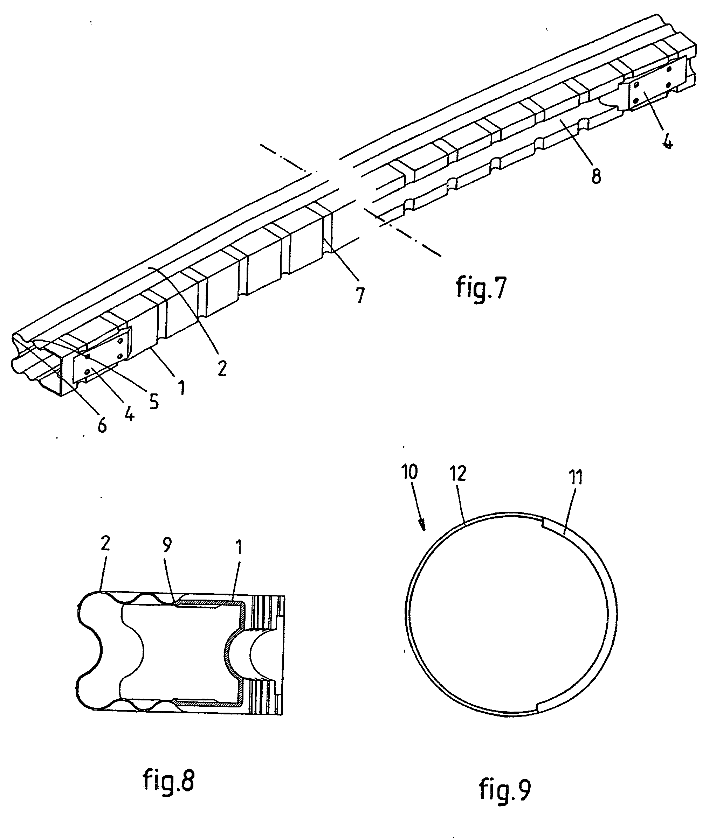

Fig. 8 is a cross sectional view of a tube from which the element of fig. 7 is made.

The drawings show embodiments of a crash energy absorbing element according to the invention which it is constructed as a front bumper for a passenger car. It should be understood that the invention may also be used in other elements, such as rear bumpers, and side crash energy absorbing elements for passenger cars and other vehicles.

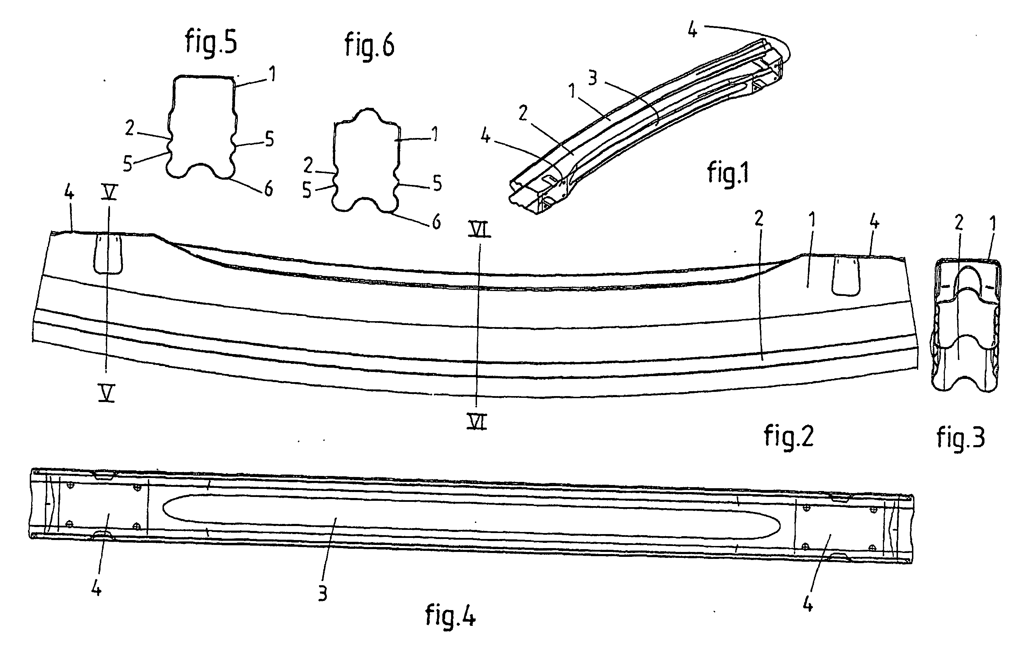

As is shown in Figs. 1-6, the bumper has a closed or box beam shape and is open at both ends. The bumper is bowed slightly and is formed of two sections, i.e. a rear high strength support section 1 and a front lower strength absorbing section 2. The support section 1 is the rigid portion and is made of a high strength material, such as (ultra) high strength steel, whereas the absorbing section is made of a material, preferably steel having a lower strength or yielding point, respectively.

The object of the support section is to prevent bending and thereby prevent damage to panels and longitudinal members of the car at low speed collisions. Preferably this support section 1 has integrated reinforcement swages 3 and mounting members or mounting surfaces 4 enabling the bumper 2 to be attached to the longitudinal members of the car. Because of the direct attachment of the bumper to the longitudinal members and the rigidity of this support section 1, it is possible to leave out a separate cross body member.

The absorbing or deforming section 2 of the bumper has good energy absorbing properties due to the choice of material. The absorbing properties are further improved by formations initiating a controlled deformation, such as convolutions 5 on the upper and lower sides of the bumper and/or convolutions 6 on the front side.

The element can be optimized as to the functional properties and weight by varying the wall thicknesses of both sections 1 and 2 and the surface ratio of both sections, steel qualities and geometry. The support section may occupy 30 - 50% of the cross section of the beam shaped element, but this figure may also vary along the length of the element, depending on the shape of both sections. A possible material for the support section 1 is hot rolled S500MC or alternatively S460MC, S420MC or cold rolled H400LA. The absorbing section 2 will be a lower strength steel with a higher M-value, for example DC04. For the sake of completeness it is noted that also aluminium sheet could be used.

A preferred method for producing the crash energy absorbing element is hydroforming of a tube that is formed of a blank of at least two different sheet parts. These sheet parts are welded together, for example through plasma or laser welding and eventually form the support section 1 and the crash absorbing section 2 of the element. The plastic foam element and skin of the car can be clipped over the bumper and positioned in the grooves of the bumper.

Fig. 7 shows left and right of a central line two different embodiments of the bumper, especially regarding the support section 2 thereof. Both embodiments show cross depressions 7 to prevent bending or stretching of the bumper, both after the hydroforming and during a crash. The embodiment on the right side of the central line also includes a longitudinal depression 8.

Fig. 8 shows a further embodiment in which the absorbing section 2 has been changed in shape. The sections 1 and 2 are connected such that the ends of the absorbing section 1 are at an angle to the support section 2 and curve back such that the absorbing section will deform inwardly during a collision.

Fig. 9 shows a tube 10 from which the bumper is made. Sheet 11 will form support section 1, whereas sheet part 12 will result in absorbing section 2. The sheet part 11 and thus the support section 11 preferably occupies 30-50% of the cross section of the tube 10 or bumper, respectively.

From the foregoing it will be clear that the invention provides a cross energy absorbing element which can be made with a low weight and at low costs, which has good crash energy absorbing properties leading to limited damage of the car body. It enables the attachment of a towing hook on the bumper and it makes a front body cross member redundant.

The invention is not restricted to the embodiments shown in the drawing and described hereinbefore, which may be varied in different ways within the scope of the accompanying claims. For example, it is possible to make up the beam of more than two sections, and the cross section of the starting tube may vary along the length thereof, regarding the distribution of the sections.

## Claims

1. Crash energy absorbing element for use on a body of a vehicle, said element having a box beam shape and being formed of at least two different beam sections (1, 2), **characterized in that** the element comprises, in each cross section, a high strength support section (1) and a lower strength absorbing section (2), said high strength support section being adapted to be attached to the body of the vehicle, wherein only said lower strength absorbing section, relative to said high strength support section, is positioned so as to face away from the vehicle.

2. Element according to claim 1, wherein the support section (1) has integrated mounting members (4) to attach the element to the vehicle.

3. Element according to claim 1 or 2, constructed as a bumper, wherein the mounting members (4) are adapted to be mounted to the longitudinal members of the body of the vehicle.

4. Element according to one of the preceding claims, wherein the support section (1) includes reinforcement portions (3).

5. Element according to one of the preceding claims, wherein the absorbing section (2) includes integrated deformation formations, such as convolutions (5, 6).

6. Element according to one of the preceding claims, wherein the material of the support section (1) has a greater thickness than that of the absorbing section (2) and/or the support section is made of a stronger material than the absorbing section.

7. Element according to one of the preceding claims, wherein the support section (1) occupies 30 - 50% of the cross section of the beam shaped element.

8. Element according to one of the preceding claims, wherein the element is a front bumper for a car, in particular a passenger car.

9. Element according to one of the preceding claims, wherein the box beam shaped element is made by hydroforming of a tube (10) that is formed of a blank of at least two different sheet parts (11, 12) welded together which form the support section (1) and the crash absorbing section (2).

10. Element according to one of the preceding claims, wherein the support section (1) is made of High Strength Steel and the crash absorbing section (2) is made of Low Strength Steel.

## Patentansprüche

1. Aufprallenergie-Absorptionselement zur Verwendung an einer Karosserie eines Fahrzeuges, wobei das Element eine Kastenträgerform hat und aus wenigstens zwei unterschiedlichen Trägerabschnitten (1, 2) geformt ist, **dadurch gekennzeichnet, dass** das Element in jedem Querschnitt einen hochfesten Stützabschnitt (1) und einen niedrigfesten Absorptionsabschnitt (2) aufweist, wobei der hochfeste Stützabschnitt (1) angepasst ist, um an der Karosserie des Fahrzeuges befestigt zu werden, wobei nur der niedrigfeste Absorptionsabschnitt relativ zu dem hochfesten Stützabschnitt so positioniert ist, dass er von dem Fahrzeug abgewandt ist.

2. Element gemäß Anspruch 1, wobei der Stützabschnitt (1) integrierte Montageteile (4) aufweist, um das Element an dem Fahrzeug zu befestigen.

3. Element gemäß Anspruch 1 oder 2, das als ein Stoßfänger konstruiert ist, wobei die Montageteile (4) angepasst sind, um an die Längsteile der Karosserie des Fahrzeuges montiert zu werden.

4. Element gemäß einem der vorhergehenden Ansprüche, wobei der Stützabschnitt (1) Verstärkungsteile (3) aufweist.

5. Element gemäß einem der vorhergehenden Ansprüche, wobei der Absorptionsabschnitt (2) integrierte Verformungsgebilde, wie Faltungen (5, 6), aufweist.

6. Element gemäß einem der vorhergehenden Ansprüche, wobei das Material des Stützabschnitts (1) eine größere Dicke als das des Absorptionsabschnitts (2) hat und/oder der Stützabschnitt aus einem stärkeren Material als der Absorptionsabschnitt hergestellt ist.

7. Element gemäß einem der vorhergehenden Ansprüche, wobei der Stützabschnitt (1) 30 - 50% des Querschnitts des trägerförmigen Elements einnimmt.

8. Element gemäß einem der vorhergehenden Ansprüche, wobei das Element ein vorderer Stoßfänger für ein Auto, insbesondere einen Personenkraftwagen ist.

9. Element gemäß einem der vorhergehenden Ansprüche, wobei das kastenträgerförmige Element durch Hydroformen eines Rohres (10) hergestellt ist, das aus einem Rohling aus wenigstens zwei unterschiedlichen zusammengeschweißten Blechteilen (11, 12) geformt wird, welche den Stützabschnitt (1) und den Aufprallabsorptionsabschnitt (2) bilden.

10. Element gemäß einem der vorhergehenden Ansprüche, wobei der Stützabschnitt (1) aus hochfestem Stahl hergestellt ist und der Aufprallabsorptionsabschnitt (2) aus niedrigfestem Stahl hergestellt ist.

## Revendications

1. Elément absorbant l'énergie de choc destiné à l'utilisation sur un corps de véhicule, ledit élément ayant une forme de poutre en caisson et étant constitué d'au moins deux sections de poutre différentes (1,2),
**caractérisé en ce que**,
l'élément comprend, dans chaque section transversale, une section de support à haute résistance (1) et une section absorbante à plus basse résistance (2), ladite section de support à haute résistance étant adaptée pour être fixée sur le corps du véhicule, dans lequel seule ladite section absorbante à plus basse résistance, par rapport à ladite section de support à haute résistance, est positionnée de façon à être détournée du véhicule.

2. Elément selon la revendication 1, dans lequel la section de support (1) comporte des éléments de montage intégrés (4) pour fixer l'élément au véhicule.

3. Elément selon la revendication 1 ou 2, construit en tant que pare-chocs, dans lequel les éléments de montage (4) sont adaptées pour être montés sur les éléments longitudinaux du corps du véhicule.

4. Elément selon l'une des revendications précédentes, dans lequel la section de support (1) comprend des portions de renfort (3).

5. Elément selon l'une des revendications précédentes, dans lequel la section absorbante (2) inclut des formations de déformation intégrées, telles que des convolutions (5,6).

6. Elément selon l'une des revendications précédentes, dans lequel le matériau de la section de support (1) présente une plus grande épaisseur que celui de la section absorbante (2) et/ou la section de support est réalisée en un matériau plus robuste que la section absorbante.

7. Elément selon l'une quelconque des revendications précédentes, dans lequel la section de support (1) occupe 30-50% de la section transversale de l'élément en forme de poutre.

8. Elément selon l'une des revendications précédentes, dans lequel l'élément est un pare-chocs avant pour une voiture, en particulier une voiture automobile.

9. Elément selon l'une des revendications précédentes, dans lequel l'élément en forme de poutre en caisson est réalisé par hydroformage d'un tube (10) qui est formé d'une ébauche d'au moins deux parties de tôle différentes (11,12) soudées ensemble qui forment la section de support (1) et la section absorbante des chocs (2).

10. Elément selon l'une des revendications précédentes, dans lequel la section de support (1) est réalisée en Acier Haute Résistance et la section absorbante des chocs (2) est réalisée en Acier Basse Résistance.
